# EUROPEAN PATENT APPLICATION

(11) **EP 0 843 263 A1**
(43) Date of publication of application: **20.05.1998**
(21) Application number: 97203490.4
(22) Date of filing: 10.11.1997
(51) Int. Cl.: G06F 13/38

(54) **System for connecting SCSI drives, IDE drives or floppy tape drives to a PC**

(30) Priority: 13.11.1996 NL 1004514
(71) Applicant: Computer Connections Group B.V., 2267 DB Leidschendam (NL)
(72) Inventor: Dankbaar, Willem Jan, 2267 DB Leidschendam (NL)
(74) Representative: de Bruijn, Leendert C.

(57) **Abstract**

System for connecting SCSI, IDE, or floppy drives to a personal computer, which system comprises the following components:
a) a memory module (30, 32) comprising a SCSI, IDE, or floppy drive,
b) an interface-unit (40), indicated by the term dock, comprising
   a1) an interface connector (44),
   a2) a parallel SCSI protocol converter (42) for converting parallel port signals into SCSI signals and vice versa,
   a3) wired connections between the interface connector (46), the converter (42) and the memory module (30,32)
   which system furthermore comprises at least one of the following components:
c) a first connecting cable (60) comprising at its one end a counter-connector (62) fitting into the interface connector and at its other end a parallel port counter-connector (64) for connection to the parallel port (12) of a PC
d) a second connecting cable (50) connecting at its one end a counter-connector (52) fitting into the interface connector and at its other end a SCSI counter-connector (54) for connecting to a SCSI port (22) of a PC
   whereby the wire connections in the interface-unit (40) are embodied such that
   - when the first connecting cable (60) is applied the signals of the interface connector are led through the converter (42) to the memory module and vice versa, and that
   - when the second connecting cable is applied the signals of the interface connector are led directly to the memory module and vice versa.

## Description

### State of the art

Sooner or later many users of PC's are confronted with the fact that the standard supplied memories, especially the standard supplied harddisk becomes full. They may have a larger harddisk installed, which brings along costs and involves a separate operation to transfer the data from the old (too small) harddisk to the new (larger) harddisk.

Another possibility is to add an additional harddisk drive in the PC which through one of the present controllers can be connected and installed in the computer. In that case the original harddisk drive maintains in use and the capacity thereof is as it were, supplemented by the capacity of the additional installed harddisk drive. Room should be available in the computer to build in the additional drive adjacent to the already present drive.

A third possibility is to purchase an external memory unit in an own housing which through one of the present ports can be connected. Thereby the original harddisk maintains in use and the capacity thereof is supplemented as it were by the capacity of the externally connected memory unit.

Almost all PC's comprise a parallel port embodied with a standardized connector and functioning according to a specified protocol. This parallel port (and the protocol thereof) is in principle designed for controlling printers and as such this port is traditionally mainly used for this function.

Additionally PC's can have a Controller with a SCSI port embodied with another but also standardized connector functioning according to the SCSI protocol. Not all PC's offer the possibility to add a SCSI port afterwards. Especially with the smaller type computers such as "notebooks" etc. the realisation of an additional SCSI connection is impossible.

Furthermore PC's may be equipped with an IDE controller comprising another standardized connector and functioning according to another protocol. Both the SCSI protocol as well as the IDE protocol are in principle designed for controlling memory units, such as harddisks, cdrom's, optical disks, removable cartridge disks, tape drives etc. Traditionally the IDE controller and SCSI controller are used mainly for that purpose.

A difference between IDE and SCSI is that a SCSI controller in general comprises an additional connector, accessible at the outside of the PC (without the necessity to open the PC housing) and destined for connecting an external peripheral outside the PC. IDE controllers are in particular applied for controlling the internal harddisk or the internal DDROM player and are in general not equipped with an external connector and are therefore mainly suited for connecting drives which have to be installed within the PC. An externally accessible IDE port can be built in Notebook computers which are equipped with so-called PCMCIA slots. In that case the IDE controller is installed on a so-called PCMCIA card which can be inserted into the PCMCIA slot. Such PCMCIA cards have a connector which is accessible for external IDE drives.

Another protocol is the so-called 'floppy protocol' which is especially used for controlling floppy disk stations, but also for controlling specific type of tape drives, especially those drives which are functioning according to the floppy protocol.

A significant part of the drives which are available at this moment are operating according to the IDE protocol or the SCSI protocol. As already indicated above connectors are applied which have a prescribed pin assignment and use signals which have a prescribed behaviour. These protocols are considered as known and will not be explained any further.

The PC user who wants to apply a memory unit first of all has to determine which connecting possibilities the related PC has, parallel, SCSI or IDE, and will then have to purchase a corresponding memory unit. Connecting a SCSI drive to a SCSI controller and connecting an IDE drive to an IDE controller does not involve in any problems. For connecting an external SCSI drive to a parallel port there are protocol-converters for converting parallel to SCSI and vice versa. If the PC does not have a SCSI connector or the SCSI connector is for other reasons not available then by means of such a converter a SCSI drive can be connected to the parallel port. This converter is in general integrated in the housing of the external drive.

In a similar manner an IDE protocol-converter or floppy-tape protocol-converter can be used to connect an IDE drive or floppy-tape drive to the parallel port. There are even protocol converters on the market which combine both protocol converters into one physical protocol converter.

Many organisations, but also a growing number of individual users dispose of a plurality of PC's, for instance one at the office and one at home. A growing number of users furthermore dispose of a portable computer, in the form of a so-called laptop or notebook. In general, the problem of too small memory space on the built in harddisk will occur with all these various computers. Because of the different connecting possibilities the user in many cases will be forced to buy a separate memory unit for each computer which through the available controller can be connected. The memory units can be installed as an external unit, i.e. within a housing adjacent and outside the PC, or as an internal unit, i.e. resident installed within the PC.

In many cases on various PC's use will be made of the same software and the user will rapidly feel the need to transfer in any way large amounts of data, more than fits on a standard floppy disk, from one PC to the other, for instance to be able to start with an application on the first PC and carry on with said application on another PC.

### Object of the invention

The purpose of the invention is to provide a system with which it is possible to connect a SCSI drive both to a parallel port as well as to a SCSI port whereby a significant part of the above described problems related with the prior art are eliminated. This system should relieve the user from the problem that he or she dependent on a certain type of available port is forced to select a specific suitable drive and should furthermore offer the user the possibility to disconnect the drive from the one PC and without any problems connect it to another PC even if there is no SCSI port available but only a parallel port.

More specifically an object of the invention is to realize a modular concept for externally connecting a SCSI drive very easily through various ports (parallel or SCSI) or internally through a bay in various PC's, whereby furthermore different numbers and types of drives ((harddisks, exchangeable media drives, etc.) can be applied.

Furthermore the purpose of the invention is to provide a system with which it is possible to connect an IDE drive both to a parallel port as well as to a IDE port whereby a significant part of the above described problems related with the prior art are eliminated. This system should relieve the user from the problem that he or she dependent on a certain type of available port is forced to select a specific suitable drive and should furthermore offer the user the possibility to disconnect the drive from the one PC and without any problems connect it to another PC even if there is no IDE port available but only a parallel port.

More specifically an object of the invention is to realize a modular concept for externally connecting an IDE drive very easily through various ports (parallel or IDE) or internally through a bay in various PC's, whereby furthermore different numbers and types of drives ((harddisks, exchangeable media drives, etc.) can be applied.

Finally another object of the invention is to provide a system which in a similar manner enables the connection of a floppy disk tape drive to the parallel port, whereby a significant part of the above-described problems related to the state of the art are eliminated.

More specifically an object of the invention is to provide a modular concept for connecting a floppy tape drive externally through the parallel port or internally through a bay in various PC's whereby furthermore different numbers and types of drives can be used.

### Short description of the invention.

In agreement with the above-mentioned object the invention provides in the first place a system for connecting SCSI drives to a PC, which system comprises the following components:
a) a memory module comprising a SCSI drive,
b) an interface-unit, indicated by the term dock, comprising
   a1) an interface connector,
   a2) a parallel to SCSI protocol converter for converting parallel port signals into SCSI signals and vice versa,
   a3) wired connections between the interface connector, the converter and the memory module
   which system furthermore comprises at least one of the following components:
c) a first connecting cable comprising at its one end a counter-connector matching with the interface connector and at its other end a parallel port counter-connector for connection to the parallel port of a PC
d) a second connecting cable comprising at its one end a counter-connector matching with the interface connector and at its other end a SCSI counter-connector for connecting to a SCSI port of a PC
   whereby the wired connections in the interface-unit are embodies such that
   - when the first connecting cable is applied the signals of the interface connector are led through the converter to the memory module and vice versa, and that
   - when the second connecting cable is applied the signals of the interface connector are led directly to the memory module and vice versa.

In agreement with the above-mentioned object the invention provides in the second place a system for connecting IDE drives to a personal computer, which system comprises the following components:
a) a memory module comprising a IDE drive,
b) an interface-unit, indicated by the term dock, comprising
   a1) an interface connector,
   a2) a parallel to IDE protocol converter for converting parallel port signals into IDE signals and vice versa,
   a3) wired connections between the interface connector, the converter and the memory module
   which system furthermore comprises at least one of the following components:
c) a first connecting cable comprising at its one end a counterconnector matching with the interface connector and at its other end a parallel port counter-connector for connection to the parallel port of a personal computer
d) a second connecting cable comprising at its one end a counter-connector matching with the interface connector and at its other end a IDE counter-connector for connecting to an IDE port of a personal computer
   whereby the wired connections in the interface-unit are embodied such that
   - when the first connecting cable is applied the signals of the interface connector are led through the converter to the memory module and vice versa, and that
   - when the second connecting cable is applied the signals of the interface connector are led directly to the memory module and vice versa.

In agreement with the above-mentioned object the invention provides in the third place a system for connecting floppy tape drives to a personal computer, which system comprises the following components:
a) a memory module comprising a floppy tape drive,
b) an interface-unit, indicated by the term dock, comprising
   a1) an interface connector,
   a2) a parallel to floppy protocol converter for converting parallel port signals into floppy signals and vice versa,
   a3) wired connections between the interface connector, the converter and the memory module
   which system furthermore comprises
c) a connecting cable comprising at its one end a counter-connector matching with the interface connector and at its other end a parallel port counter-connector for connection to the parallel port of a personal computer
   whereby the wired connections in the interface-unit are embodied such that the signals of the interface connector are led through the converter to the memory module and vice versa.

Irrespective of the applied protocol, SCSI, IDE or floppy, in all cases an interface unit or dock is used which comprises only one interface connector. Therewith the costs of the interface are reduced and in many cases also the necessary space is reduced.

According to a preferred embodiment of the system the memory is contained in a separate housing comprising a click connector and the dock is contained in a separate housing comprising a host connector matching with said click connector.

Therewith the drive is unlinked from the connector technology so that the drive can be exchanged easily and can be used in combination with other personal computers.

In other words, because the actual memory module is connected through a connector to the interface and can be decoupled from the interface, it is possible to use multiple SCSI modules on said interface. These modules could be of the same type, for instance harddisks, but could also be of different type, for instance a harddisk and an optical disk drive.

Within the scope of the invention it is on the other hand also possible that both the drive as well as the interface unit are contained in one and the same housing. In that case still an interface unit or dock is used which comprises only one single interface connector, so that the costs of the interface are reduced and in many cases also the necessary space is reduced.

The specific advantages of the invention will be explained in more detail with reference to the attached drawings.

### Description of the figures

Figure 1 illustrates a schematical view on a system according to the invention comprising a SCSI module, an interface unit (dock) and a number of connecting cables.

Figure 2 illustrates the use of the releasable module according to figure 1 in a slide-in station or bay built into a personal computer.

Figure 3 illustrates a schematical view of a system according to the invention in which the drive and the interface unit are contained in one single housing.

Figure 4 illustrates schematically an embodiment with a divided housing, whereby one part thereof contains the memory module and the other part contains the dock.

### Detailed description of the figures

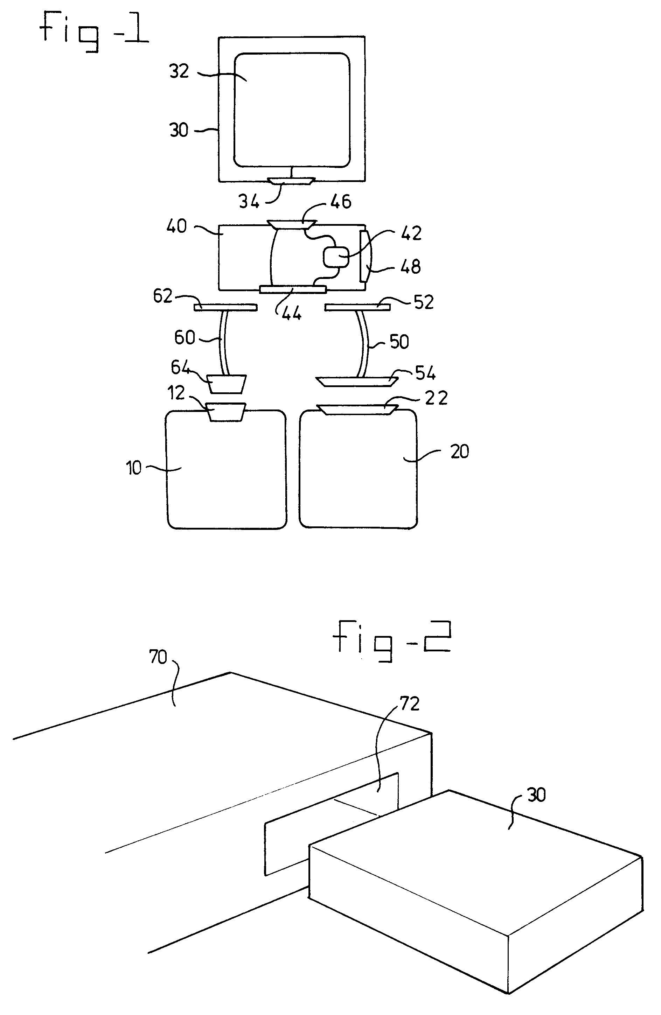

Figure 1 illustrates schematically a first personal computer, shortly indicated as PC 10, comprising a parallel port 12, and a second personal computer, shortly indicated as PC 20, comprising a SCSI port 22.

In figure 1 furthermore a module 30 is shown comprising a SCSI drive 32. This SCSI drive may for instance be a harddisk, an optical disk drive, a CDROM drive etc. The module comprises furthermore a connector 34 which hereinafter will be indicated as the click-connector.

Figure 1 illustrates furthermore an interface unit 40 comprising a parallel to SCSI protocol converter 42, an interface connector 44 and a counter-connector 46 matching the click connector 34 of the memory module 30. Furthermore the interface unit comprises preferably an additional SCSI connector 48 to be able to loop through to a further interface unit. The interface unit 40 will be indicated hereinafter also by the term dock.

By means of a standard SCSI cable 50 the interface unit 44 can be connected to the SCSI port 22 of the PC 20, or can be connected to the parallel port 12 of the PC 10 through a special cable 60. For that purpose the standard SCSI cable 50 comprises a the side of the dock 40 a counter-connector 52 matching the interface connector 44 and comprises at the PC side the SCSI counter-connector 54 matching the SCSI port 22. This cable is available on the market as a standard SCSI cable.

The cable 60 comprises at its one end a counter-connector 62 matching the interface connector 44 and at its other end a parallel counter connector 64 matching the parallel port 12. This cable is non-standardly available on the market, but can be made by any cable manufacturer using standard connectors because only the 'pin assignment' within the cable is different from standard available cables.

It is remarked that the parallel port 12 of the PC 10 is of a different type than the SCSI port 22 of the PC 20 so that not the same cable can be used for connecting to the interface connector 44. In the hypothetical case that both connectors 12 and 22 have the same physical embodiment, event then two different types of cables will be necessary because both ports each have a separate protocol. The difference resides in the so-called 'pin assignment', i.e. the number of internal leads and the way in which these leads in the cable are at both ends attached to the connectors. At the side of the interface unit 40 this hypothesis is in fact used in agreement with the invention for both cables.

Just seen from the outside the connectors 52 and 62 have the same embodiment. They fit both to the interface connector 44. However, the 'pin assignment' on both connectors is mutually different. They both are used with a different protocol, in the illustrated embodiment the parallel port protocol and the SCSI protocol.

Inside the dock 40 is an electronic circuit 42 which performs a signal conversion such that the signals according to the parallel port protocol are converted into SCSI-protocol signals and vice versa. If the module 30 is connected to the SCSI port 22 of the PC 20 through the dock 40 and using the cable 50, then between the port 22 and the SCSI drive 32 a connection is realized functioning according to the SCSI protocol whereby in fact the converter circuit 42 is not active.

If the user, however, selects for application of the parallel port and uses the cable 50 between the parallel port 12 and the interface connector 44 then through the dock 40 a connection will be realized between the interface connector 44 and the SCSI drive 32 in such a manner that the converter electronics 42 will be active.

Because in both protocols still a number of signal conductors are used in common and because furthermore the parallel protocol uses less pins than the SCSI protocol, it appeared to be possible to design one and the same interface connector 44 for connecting to each of both PC ports (parallel port or SCSI port). It appeared to be possible furthermore to relatively restrict the number of pins for the connectors 44, 52, and 62, such that connectors can be applied which are normally available on the market. Preferably the interface connector 44 has the same external embodiment as the standard available SCSI connector. This has the advantage that for the cable 50 a standard SCSI cable can be used.

For connecting a peripheral to different ports traditionally correspondingly different connectors at the peripheral are applied. Such an already applied random peripheral can have a SCSI connector for connection to a SCSI port. Another peripheral can comprise a physically different connector for connecting to the parallel port, whereby inside the housing of the peripheral use is made of a parallel to SCSI converter. There are furthermore SCSI peripherals available on the market which combine both connection methods, however, always using two physically different connectors on the peripheral: one for direct connection to a SCSI port, and the other for connection to a parallel port.

The unique application of only one standard connector for connection to two different ports (parallel or SCSI) functioning furthermore according to a different protocol brings a number of advantages, i.e.:
1) saving on the costs of a second additional connector
2) saving on the physical space which would be necessary for said additional connector.

The first advantage causes a decrease of the cost price and the second advantage could lead to a restriction of the dimensions of the peripheral, an aspect which is relevant with respect to the increasing demand for still smaller and still more portable products.

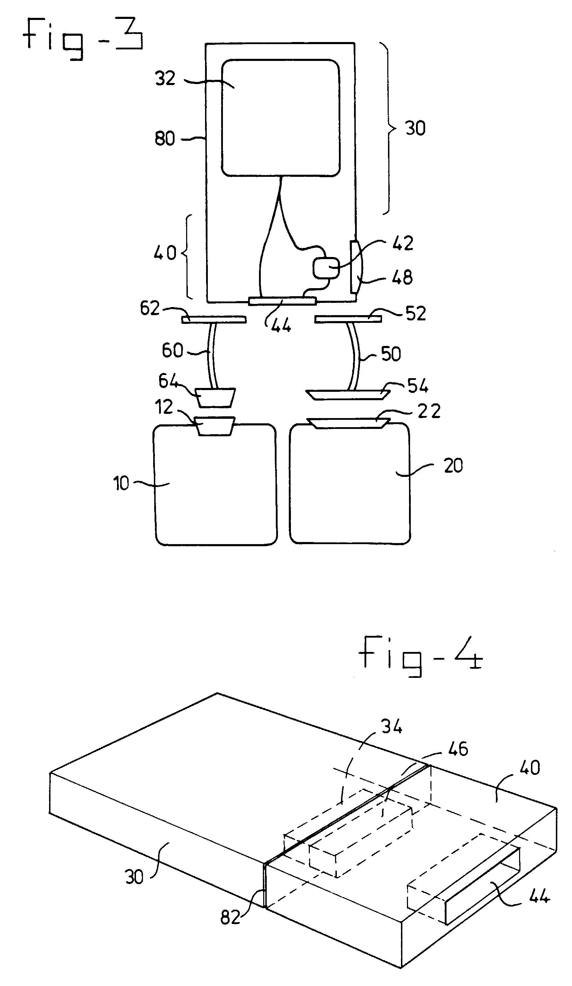

Figure 2 illustrates an embodiment of a computer PC 70 in which a slide-in station or bay 72 is installed. This bay is a mechanical container, partly open, which comprises at the inside a SCSI connector (not visible in the figure) providing a connection to the SCSI controller of the PC. As schematically indicated in figure 2 the module 30 from figure 1 containing therein the SCSI drive 32, can be moved into the thereto designed slide of the bay 72. After it is built in into the PC 70, this slide-in station will present itself to the user as a cavity of which the dimensions correspond to the dimensions of the module 30. By sliding the module 30 inside the cavity up to a sufficient depth, at the end of the slide-in movement contact will be made between the connector 34 onto the module 30 and the built in connector within the slide. These types of slides are known as such, for instance applied in combination with car radios, and do not need further explanation.

As far as there is space available within the PC 70 eventually more of these bays could be installed in the PC and connected in series to the SCSI controller of the PC. If not sufficient space is available then it is also possible to make use of a separate housing in which a number of bays are installed whereby a separate SCSI cable connects this housing the SCSI port of the PC 70.

Figure 3 illustrates an embodiment of the system according to the invention whereby the dock and the memory module are contained into one single housing. This housing is indicated by 80. All the other components are completely the same as illustrated in figure 1 and are therefore indicated by the same reference numbers.

The difference with the embodiment according to figure 1 relies in the fact that the memory module 30 and the dock 40 are contained into one single housing 80 and that there are fixed connections between the memory module 30 and the dock 40. That does not alter the fact that this whole combined unit in principle comprises only one single interface connector 44 for connecting either to the parallel port 12 or to the SCSI port 22. In prior art external drives, in which the memory module is combined with an interface circuit use is made of a number of connectors, for instance one for connecting the whole drive to the parallel port and another for connecting the whole drive to the SCSI port. In comparison with these prior art external drives the application of only one connector 44 results into a number of advantages:
- savings on the costs of additional connectors;
- significant space savings, especially if rather voluminous connectors are considered.

It is remarked that also in this embodiment the additional SCSI connector 48 can be present for looping through to other interface units or docks. The use of such looping though possibilities is, however, standard in the SCSI technology and is as such not considered part of the invention.

Finally figure 4 illustrates a practical embodiment of a divided housing. The memory module 30 containing the drive 32 is installed within a separate housing and the dock 40 containing the converter 42 as well as the necessary wiring is installed into a separate housing, indicated by 40 in figure 40. The host connector 46 and the click connector 34 are indicated by dot lines in figure 4. Furthermore the interface connector 44 for providing the connection with any of the ports of a PC, is visible. As schematically illustrated the housings are embodied such that the user obtains the visual impression of only one integrated unit. For the user only the seam 82 is visible which makes clear that in fact the housing comprises two separate sections. The connection between the housing 30 and the housing 40 is preferably obtained by a snap connection. These snap elements can be present for instance within the connectors 46 and 34, but can also be present at the housing itself. As such the realisation of a snap connection is known and therefore no further details will be provided.

As remarked above the concept of the invention cannot only be applied to SCSI drives, but also to IDE-drives and to floppy tape drives. If in the above figure description the term SCSI is replaced by IDE then the IDE situation is illustrated and described. If in the above figure description the term SCSI is replaced by floppy, then therewith the floppy situation is illustrated and described, be it that external floppy connections as such are not known and that external floppy tape drives can only be connected therefore to the external parallel port.

### A practicle application

The advantages of the system according to the invention will be discussed again in the following with reference to a practicle example.

A user has at home a Notebook computer and a desktop PC. At the office he makes use of another desktop PC. In both desktop PC's a SCSI controller is already present, however, the PC at home does not have an external SCSI port. The SCSI controller therein is purely destined for controlling the internal harddisk. The Notebook does not provide a SCSI controller at all but has a PCMCIA slot and of course a parallel port.

Furthermore the user has some business with a graphical designer working only on Apple computers, and the user likes to exchange computer data with this designer through exchangeable optical disks which are already applied in combination with the Apple computers of this business partner. However, up to now our user has no optical disk drive available at any of his three computers.

Both the Notebook as well as the PC at the office do have a built in harddisk which is too small. Extension of the disk space is urgently needed. At the other PC at home there is a strong need for a utility to make a security copy by means of a tapestreamer. To a less extent such a need applies to the other PC's.

### a) A solution through conventional methods

Which possibilities are there in case a user does not have the modular concept according to the invention available? Of the many variants one possible variant will be described:

The user may decide to have a tapestreamer built into the PC at home, because in this PC sufficient space is available. The disadvantage thereof is that said tapestreamer is not available for the other PC's. To eliminate this disadvantage he might come to a decision to choose an external SCSI tapestreamer which can be connected through a SCSI port. For that purpose a second SCSI controller has to be built into the PC at home, because the already available SCSI controller does not have an external SCSI port. Howevr, iuseablen that case the external tapestreamer can also be used in combination with the PC at the office. Unfortunately, however, not in combination with the Notebook, because the Notebook does not have a SCSI port. A further disadvantage is that the external tapestreamer is more expensive than the internal tapestreamer. To create a backup possibility for all three personal computers a parallel port tapestreamer has to be selected which again is more expensive than the external SCSI tapestreamer. Considering pros and cons our user decides to buy an external parallel port tapestreamer.

For the PC at the office he decides to replace the harddisk for another harddisk having a larger capacity. The PC is too vital to transport it to the dealer for carrying out the operation. Therefore the dealer is asked to come to the office to perform the replacement there. Apart from the costs for making a housecall the dealer also charges additional labour time for transferring data from the old harddisk to the new harddisk. The old harddisk has to be written off, because it cannot be used in the PC anymore. There is only room for one harddisk. It is also impossible to build this harddisk into the Notebook.

It is, however, possible to add an external optical disk drive onto the present SCSI port and the acquisition of this optical disk drive is decided because therewith the desired exchangeability of data with the business partner is possible. Unfortunately this optical drive is not applicable with the PC's at home. The reason therefore is that the PC does not have an externally available SCSI port and the Notebook does not have a SCSI controller at all.

There still is the need to extend the capacity of the Notebook disk. After considering the possibilities our user decides to buy an external harddisk which through the parallel port can be connected. He does not want to write off his present harddisk and because he has now the possibility to transfer less used data to this external harddisk he is able to create free space on the internal harddisk enabling him to take the most important data on a journey. It is rather awkward to take the voluminous external harddisk on a journey together with the Notebook. The fact that the external harddisk operates more slowly because of the parallel port connection was accepted as unavoidable. Our user had considered to take an external harddisk which was connectable through the much faster PCMCIA port, but has discarded this idea because it could be handy to be able to use the external harddisk on his other PC's through the always present parallel port. An additional disadvantage, which he takes for granted, is that he is not able to make a backup from this external harddisk connected to the Notebook, with his parallel port tapestreamer. The parallel port is occupied by its harddisk and the streamer only serves the purpose to make a backup from the internal harddisk.

Resuming our user has to write off 1 drive and has bought 4 drives, i.e.:
internal drives:
1) the harddisk for the PC at the office external drives:
2) the SCSI optical disk drive
3) the parallel port tapestreamer
4) the parallel port harddisk drive

In this order also the costs for each separate type of memory unit are increasing. Internal is cheaper than external and the external parallel port version is in general a bit more expensive than an external SCSI version. The disadvantage that not all solutions are applicable on the mutual PC's or are exchangeable, still remains.

### b) A solution through the modular concept according to the invention

In the following example it is assumed that the same user is completely aware of all the possibilities offered by the above-described modular concept according to the invention.

He decides in the first place to have a bay installed in the two desktop PC's. That is a relatively small investment because a bay does not comprise high quality electronic technology, and does not comprise a drive. It is only an "extension" of the SCSI controller. Furthermore he decides to buy 1 dock.

Apart from that he decides to buy three SCSI drives in corresponding module housing. These are only a little bit more expensive than the standard internal SCSI drives, because the only additional thing is a housing with module connector. This (relatively very cheap) housing is bought 1 more in addition, however, empty, i.e. without built in drive. The three modules are respectively a larger harddisk for the PC at the office (initially it was only meant to work in cooperation with this PC), an optical disk drive and a tape drive. The empty housing is used to build in the old harddisk from the PC at the office. This harddisk can now be used in the bay and does not have to be written off. Furthermore transfer of data is not necessary, so that the costs therefore are eliminated. The old disk can be exchanged by the new disk and both can be used again.

An advantage is now that both disks can be used furthermore with the other PC's. In the PC at home for instance the built in bay can be used, on the Notebook it is a choice between connecting through the dock and connecting through the parallel port. The connection through the parallel port applies furthermore for any other PC which he might decide to buy in the future or might use in combination with its modules, for instance on PC's at customers or suppliers. It does not matter of these PC's are Apples or standard PC's, because connection to both the SCSI port as well as the parallel port is made possible by means of the dock.

The applicability on all PC's applies for instance also for the other modules (the optical disk drive and the tape drive). Because of that our user has discarded a separate parallel port harddisk for his Notebook. He is able to use its old harddisk from the office but also the optical disk drive in combination with the dock. In the last case with only one drive he has not only obtained exchangeability with his business partner, but also extendability on the Notebook. In fact the capacity is not restricted because optical disks are as such also exchangeable, such as diskettes in a diskette station. So the purchase of a separate harddisk for the Notebook can be omitted. In view of the speed of the optical disk drive the user considers now to buy a PCMCIA to SCSI adapter. That could lead to the additional advantage that he is able to make a backup from the optical disks to the parallel connected tapestreamer. That was impossible in the above-described solution a) because in that case the harddisk was only connectable to the parallel port, so that the parallel port was not available anymore for connecting the tape drive.

On the PC at the office he has as many as three connecting possibilities, i.e. internally in the bay, externally with the dock on the SCSI port, and externally with the dock on the parallel port. The last two types of connections have the advantage that the bay is still free for other modules so that copying from such module to the externally connected module is possible. Apart from that it will be possible in the future to connect more than one type module on the external SCSI port through a second dock. The dock comprises the possibility to "loop through" to a second SCSI drive through the SCSI out connector installed on the dock (48 in figure 1).

The user is able to decouple a module (for instance a harddisk) which is used with a specific PC, very easily, couple it to any other PC, and use it there. Furthermore the dealer has explained that if he might need additional disk space in future he does not have to count with further installation costs. The dealer is now able to supply ready modules for direct use in a bay or through a dock.

An additional advantage is that a module can be secured physically by putting it for instance into a safe or in a locked drawer. Especially with harddisks this can be desirable.

A last advantage is the portability. The separate modules are of course smaller that a complete external drive built into a housing. Therefore the modules are not only simpler to install but also easier to carry.

Resuming the user does not have to write off any single drive, does not have to pay additional labour time and has bought only 3 drives instead of 4, with additionally 1 dock and 2 bays:
1) 1 x Dock
2) 2 x Bay
3) 3 x modular drives
   a) the SCSI tape drive
   b) the SCSI harddisk drive
   c) the SCSI optical disk drive

Because the module housing and the bays are relatively cheap components the costs of these modules are more in the neighbourhood of internal drives than external drives.

Furthermore the technology to connect the drives externally through either a parallel port or a SCSI port, was purchased only once in the form of a dock. In the conventional solution a) he was obliged to buy this technology more than once (2 x parallel port streamer and 1 x parallel port harddisk).

The disadvantage that in solution a) not all drives are applicable on the mutual PC's is now completely disappeared. Each drive can be applied on each PC, whereby there are even broader connecting possibilities and also more than 1 drive can be connected to one PC. Furthermore eventual extensions in the future are broader and easier because of the availability of ready modules.

With the modular concept according to the invention the total investment is smaller and the application possibilities are significantly larger.

### Summarizing the advantages:

- Total number of drives can be restricted.
- Modules are needed which have almost the same costs as internal drives instead of external drives which are more expensive.
- All drives and types of drives can be used on all PC's.
- The interface technology for connecting the external drives (directly to the SCSI or to the parallel port), has to be purchased only once because the dock can be released from the actual SCSI drive. This is instead of an integrated solution inside the housing of en external (conventional) memory unit.
- At the expense of a relatively small additional investment (namely for the bay) one and the same drive can be used both internally on the one PC, externally on the other PC (by means of the interface unit). With a conventional method always two drives are necessary (1 x built in + 1 x external).
- Comparing with the conventional internal drives it applies for the modular concept: One and the same drive can be made "dividable" for more PC's as long as it comprises a relatively cheap slide in station. In contrast to the conventional method, whereby for each PC a separate drive is installed in the PC less drives have to be purchased assuming that the drive can be "shared" indeed and does not have to be available on each PC continuously and simultaneously.
- On one PC a number of module drives, such as harddisks, tape drives, removable disk drives, etc., can be used by exchanging one and the same bay, or by exchanging one and the same dock.

## Claims

1. System for connecting SCSI drives to a PC, which system comprises the following components:
a) a memory module (30, 32) comprising a SCSI drive,
b) an interface-unit (40) indicated by the term dock, comprising
a1) an interface connector (44),
a2) a parallel to SCSI protocol converter (42) for converting parallel port signals into SCSI signals and vice versa,
a3) wired connections between the interface connector (46), the converter (42) and the memory module (30,32)
which system furthermore comprises at least one of the following components:
c) a first connecting cable (60) comprising at its one end a counter-connector (62) matching with the interface connector and at its other end a parallel port counter-connector (64) for connection to the parallel port (12) of a PC
d) a second connecting cable (50) comprising at its one end a counter-connector (52) matching with the interface connector and at its other end a SCSI counter-connector (54) for connecting to a SCSI port (22) of a PC
whereby the wired connections in the interface-unit (40) are embodies such that
- when the first connecting cable (60) is applied the signals of the interface connector are led through the converter (42) to the memory module and vice versa, and that
- when the second connecting cable is applied the signals of the interface connector are led directly to the memory module and vice versa.

2. System according to claim 1, characterized in that the memory module is contained in a separate housing comprising a click connector and that the dock is contained in a separate housing comprising a host connector matching with said click connector.

3. System according to claim 1, characterised in that both the drive and the interface-unit are contained in one single housing comprising only the interface-connector.

4. System according to claim 1 or 2, characterized in that the system comprises furthermore a slide-in station to be build into the computer, indicated by the term bay, comprising a counter-connector matching with the click connector (34) of the memory module, which bay is connected to the SCSI controller inside the computer, and that the housing of the memory module is adapted to the shape of the bay such that the memory module can slide into said station until the connector and counter connector are coupled.

5. System according to claim 1, 2 or 4, characterised in that the shape of the memory module housing and of the dock housing are mutually adapted such that after coupling both housings, whereby the host connector and the click connector become coupled, one single unit is obtained which presents itself externally as a homogeneous product whereby the transition between both components is only visible as a seam.

6. System according to one of the claims 1, 2, 4 or 5, characterized in that the interface-unit and the memory module comprise means for establishing a snap connection between both components.

7. System according to one of the preceding claims, characterized in that externally the interface connector is embodied as a standard available connector of the SCSI type.

8. System according to one of the preceding claims, characterized in that the dock comprises a further SCSI connector by means of which the coupling to a further interface-unit (looping through) can be realised.

9. System according to one of the preceding claims, characterized in that the second cable is a standard SCSI cable.

10. Dock for application in a system according to one of the preceding claims, characterized in that the dock comprises
a1) an interface connector (44)
a2) a parallel to SCSI protocol converter (42) for converting parallel port signals into SCSI signals and vice versa.

11. System for connecting IDE drives to a personal computer, which system comprises the following components:
a) a memory module (30, 32) comprising a IDE drive,
b) an interface-unit (40), indicated by the term dock, comprising
a1) an interface connector (44),
a2) a parallel to IDE protocol converter (42) for converting parallel port signals into IDE signals and vice versa,
a3) wired connections between the interface connector (46), the converter (42) and the memory module (30,32)
which system furthermore comprises at least one of the following components:
c) a first connecting cable (60) comprising at its one end a counter-connector (62) matching with the interface connector and at its other end a parallel port counter-connector (64) for connection to the parallel port (12) of a personal computer
d) a second connecting cable (50) comprising at its one end a counter-connector (52) matching with the interface connector and at its other end a IDE counter-connector (54) for connecting to an IDE port (22) of a personal computer
whereby the wired connections in the interface-unit (40) are embodied such that
- when the first connecting cable (60) is applied the signals of the interface connector are led through the converter (42) to the memory module and vice versa, and that
- when the second connecting cable is applied the signals of the interface connector are led directly to the memory module and vice versa.

12. System according to claim 11, characterized in that the memory module is contained in a separate housing comprising a click connector and that the dock is contained in a separate housing comprising a host connector matching with said click connector.

13. System according to claim 11, characterised in that both the IDE drive and the interface-unit are contained in one single housing comprising only the interface-connector.

14. System according to claim 11 or 12, characterized in that the system comprises furthermore a slide-in station to be build into the computer, indicated by the term bay, comprising a counter-connector matching with the click connector (34) of the memory module, which bay is connected to the IDE controller inside the computer, and that the housing of the memory module is adapted to the shape of the bay such that the memory module can slide into said station until the connector and counter connector are coupled.

15. System according to claim 11, 12 or 14, characterized in that the shape of the memory module housing and of the dock housing are mutually adapted such that after coupling both housings, whereby the host connector and the click connector become coupled, one single unit is obtained which presents itself externally as a homogeneous product whereby the transition between both components is only visible as a seam.

16. System according to one of the claims 11, 12, 14 or 15, characterised in that the interface-unit and the memory module comprise means for establishing a snap connection between both components.

17. System according to one of the preceding claims 11-16, characterised in that externally the interface connector is embodied as a standard available connector.

18. Dock for application in a system according to one of the preceding claims 11-17, characterised in that the dock comprises
a1) an interface connector (44)
a2) a parallel to IDE protocol converter (42) for converting parallel port signals into IDE signals and vice versa.

19. System for connecting floppy tape drives to a personal computer, which system comprises the following components:
a) a memory module (30, 32) comprising a floppy tape drive,
b) an interface-unit (40), indicated by the term dock, comprising
a1) an interface connector (44),
a2) a parallel to floppy protocol converter (42) for converting parallel port signals into floppy signals and vice versa,
a3) wired connections between the interface connector (46), the converter (42) and the memory module (30,32)
which system furthermore comprises
c) a connecting cable (60) comprising at its one end a counter-connector (62) matching with the interface connector and at its other end a parallel port counter-connector (64) for connection to the parallel port (12) of a personal computer
whereby the wired connections in the interface-unit (40) are embodied such that the signals of the interface connector are led through the converter (42) to the memory module and vice versa.

20. System according to claim 19, characterized in that the memory module is contained in a separate housing comprising a click connector and that the dock is contained in a separate housing comprising a host connector matching with said click connector.

21. System according to claim 19, characterised in that both the drive and the interface-unit are contained in one single housing comprising only the interface-connector.

22. System according to claim 19 or 20, characterised in that the system comprises furthermore a slide-in station to be build into the computer, indicated by the term bay, comprising a counter-connector matching with the click connector (34) of the memory module, which bay is connected to the floppy controller inside the computer, and that the housing of the memory module is adapted to the shape of the bay such that the memory module can slide into said station until the click connector and counter connector are coupled.

23. System according to claim 19, 20 or 22, characterised in that the shape of the memory module housing and of the dock housing are mutually adapted such that after coupling both housings, whereby the host connector and the click connector become coupled, one single unit is obtained which presents itself externally as a homogeneous product whereby the transition between both components is only visible as a seam.

24. System according to one of the claims 19, 20, 21 or 23, characterised in that the interface-unit and the memory module comprise means for establishing a snap connection between both components.

25. System according to one of the preceding claims 19-24, characterised in that externally the interface connector is embodied as a standard available connector.

26. Dock for application in a system according to one of the preceding claims 19-25, characterised in that the dock comprises
a1) an interface connector (44)
a2) a parallel to floppy protocol converter (42) for converting parallel port signals into floppy signals and vice versa.
